# EUROPEAN PATENT SPECIFICATION

(11) **EP 2 433 491 B1**
(45) Date of publication and mention of the grant of the patent: **23.09.2015**
(21) Application number: 10015804.7
(22) Date of filing: 18.12.2010
(51) Int. Cl.: A01K 39/01

(54) **Suet feeder**
Talgfuttervorrichtung
Dispositif d'alimentation de suif

(30) Priority: 23.09.2010 CA 2715239
(43) Date of publication of application: 28.03.2012
(73) Proprietor: PLC Patents and Trademarks Inc., Lac Brome, Quebec J0E 1V0 (CA)
(72) Inventor: Côté, Paul L., Knowlton, QC J0E 1V0 (CA)
(74) Representative: Graf Glück Kritzenberger

(56) References cited:
- EP-A1- 1 723 848
- US-A- 4 646 686
- US-A- 5 052 342

## Description

### FIELD OF THE INVENTION

The present application relates to a suet feeder and more particularly, relates to a squirrel resistant suet feeder.

### BACKGROUND OF THE INVENTION

Suet feeders for feeding birds are widely used. Although some people will make their own suet and hang it out by a piece of string or in a different fashion, most people cannot be bothered to make their own suet. Accordingly, there is a substantial market for prepackaged suet which traditionally comes in a plastic container with a layer of material sealed thereto. Typically, this layer of material is a flexible plastic material.

In order to accommodate this prepackaged suet, various simple feeders have been utilized. One popular arrangement is the use of a metal cage to which a hanger is attached. Thus, one merely removes the suet from the package and inserts it into the container, closes the container and the container being hung from a suitable hook or the like.

While the above feeders are inexpensive, they suffer from a couple of disadvantages. One of these is the mess which typically occurs when one grips the opened package by hand since the warmth of the hand will tend to melt the fat component of the suet. Also, the suet is susceptible to being eaten by undesired marauders such as squirrels. One or two of the squirrels can easily eat the contents of one of the suet packages.

Document EP 1 723 848 A1 discloses a bird feeder comprising a housing having a spring mounted therein, a shroud extending about a feed holder and at least a portion of said housing, said spring biasing said shroud upwardly with respect to said housing. The shroud comprises at least one access opening therein to permit access to the feed. The shroud is moveable between an open position permitting access to said feed and a closed position wherein access to said feed is denied. The bird feeder further comprises a cover secured to said shroud.

### SUMMARY OF THE INVENTION

It is an object of the present invention to provide a squirrel resistant suet feeder.

According to one aspect of the present invention, there is provided a suet feeder comprising a housing having a spring mounted therein, pair of a suet holders connected to the central housing, the suet holder being sized to retain a prepackaged package of suet, a shroud extending about the pair of suet holders and at least a portion of the central housing, the spring biasing the shroud upwardly with respect to the central housing and said suet holders, the shroud having at least one suet access opening therein to permit access to the suet holder, the shroud being moveable between an open position permitting access to the suet holder and a closed position wherein access to the suet holder is denied, and a cover secured to the shroud, wherein one respective suet holder of the pair of suet holders is provided on each side of said housing.

It is a further object of the present invention to provide a suet feeder and a prepackaged package of suet comprising a housing having a spring mounted therein, a suet holder connected to the housing, the prepackaged package of suet being mounted in the suet holder, a shroud extending about the suet holder and at least a portion of the housing, the spring biasing the shroud upwardly with respect to the housing and suet holder, the shroud having at least one suet access opening to permit access to the suet holder, the shroud being moveable between an open position permitting access to the suet holder and a closed position where access to the suet holder is denied, and a cover secured to the shroud.

The suet feeder of the present invention is designed to be compatible with commercially available prepackaged packages of suet. These packages are generally very similar and usually comprise a plastic tray in which the suet with seed is placed. The tray is then conventionally wrapped with a plastic wrap to seal the same. Typically, the suet tray is approximately 5" by 5" with a depth of one inch. Naturally, the invention of the present invention can be manufactured to accommodate any other size of prepackaged suet if so desired. The preparation of the prepackaged suet can also be done by the user.

The suet feeder preferably is arranged such that a housing mounts the operative components inside. In turn, one or more suet holders are placed on the exterior of the housing. The suet feeders are designed to accept the prepackaged packages of suet after removal of the plastic wrap. In a preferred embodiment, each of the suet holders is pivotably mounted so that access may be had to the interior thereof for inserting and removing the packages of suet.

Although it would be possible to use the spring either in a compression or tension state, a preferred embodiment mounts the spring interiorly of the housing about a rod, the bottom of which extends exteriorly of the housing. The rod is screwthreadably engaged with a nut which is non rotatable. In so doing, the tension on the spring can be increased by rotation of the rod within the nut which will cause further compression of the spring.

In one preferred embodiment, a plurality of detents are utilized for the pivotal movement of the suet holders and for retaining the suet holders in a closed position.

Surrounding the housing and associated components is a shroud. Typically, the shroud is formed of wire mesh and will have access openings which will permit the birds to gain access to the suet. However, when a weight greater than a predetermined weight is placed on the shroud (such as by a squirrel), the shroud will move downwardly with respect to the housing and suet holders thus denying access to the suet by the marauder. Preferably, the tension can be adjusted from exteriorly of the feeder and still more preferably the feeder will provide a visual indicator of the settings.

### BRIEF DESCRIPTION OF THE DRAWINGS

Having thus generally described the invention, reference will be made to the accompanying drawings illustrating an embodiment thereof, in which:

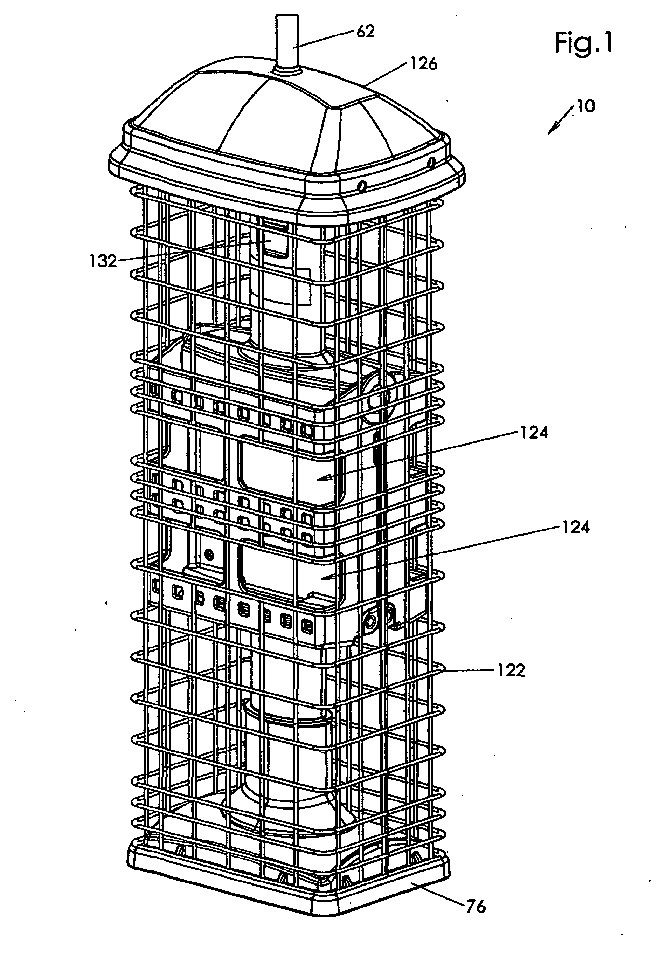

Figure 1 is a perspective view of the suet feeder according to an embodiment of the present invention and wherein the suet may be accessed;

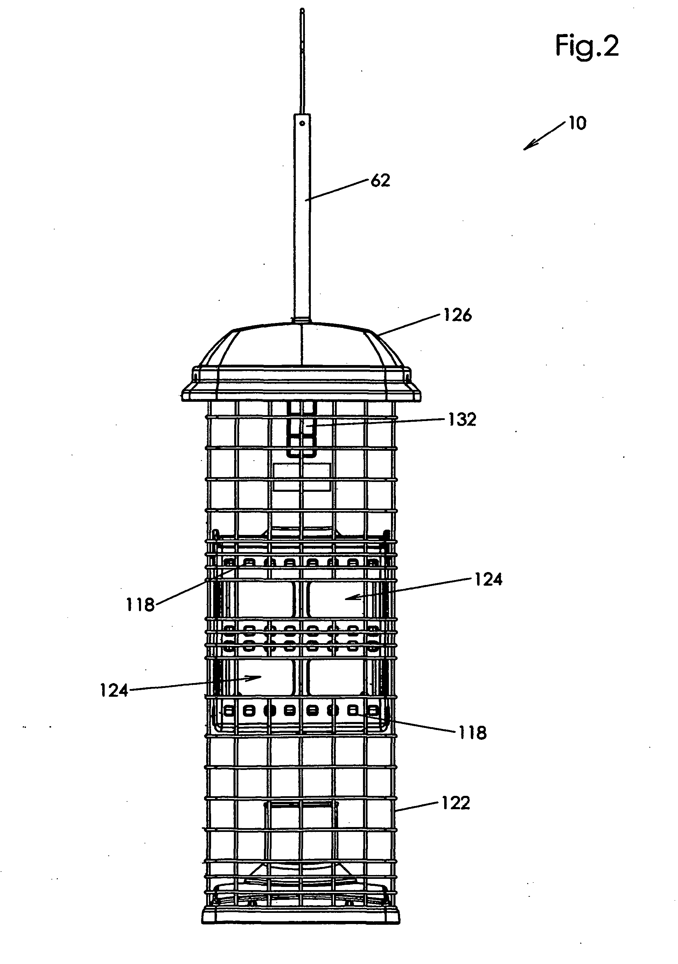

Figure 2 is a front view thereof;

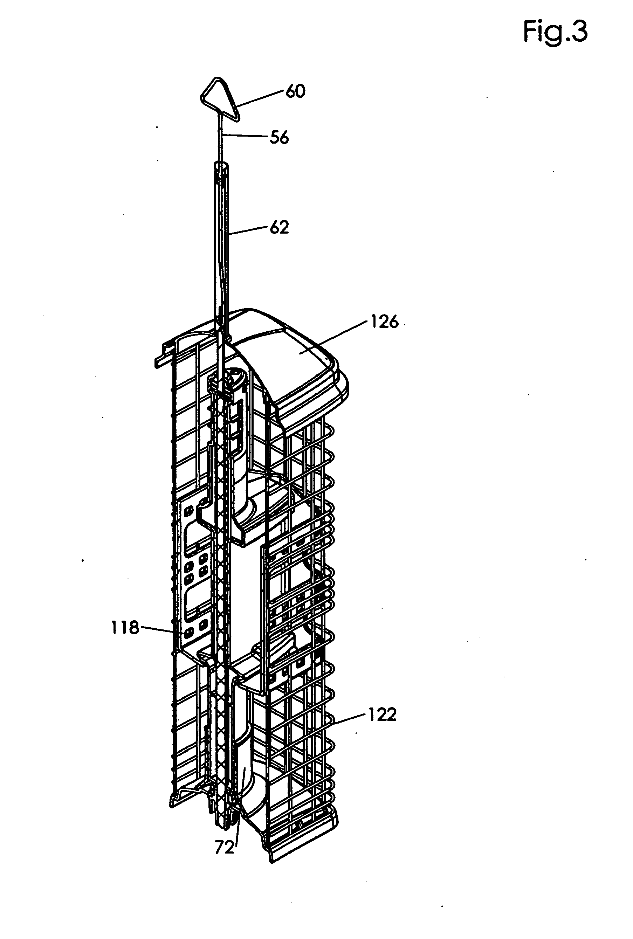

Figure 3 is a longitudinal sectional view thereof;

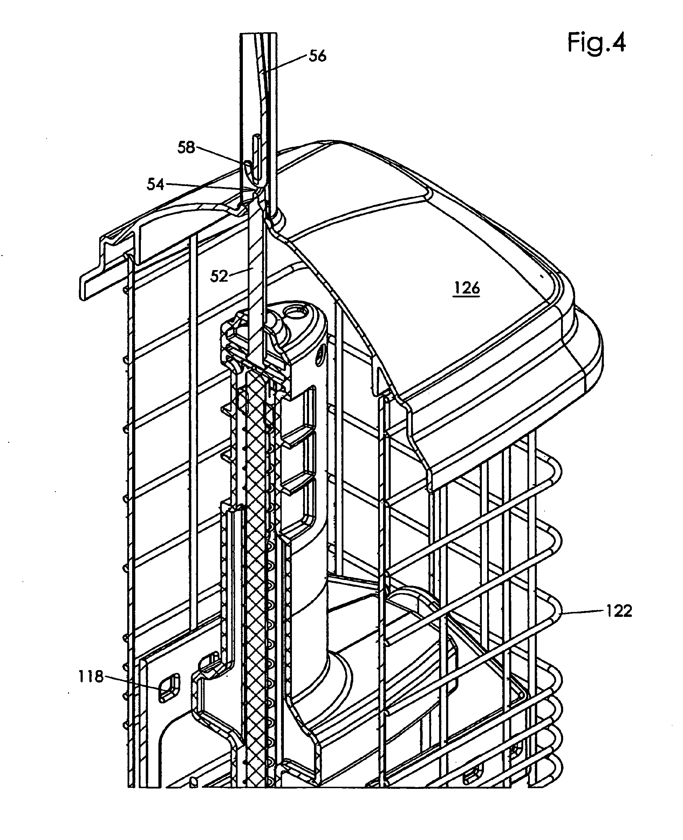

Figure 4 is an enlarged view of the upper portion of Figure 3;

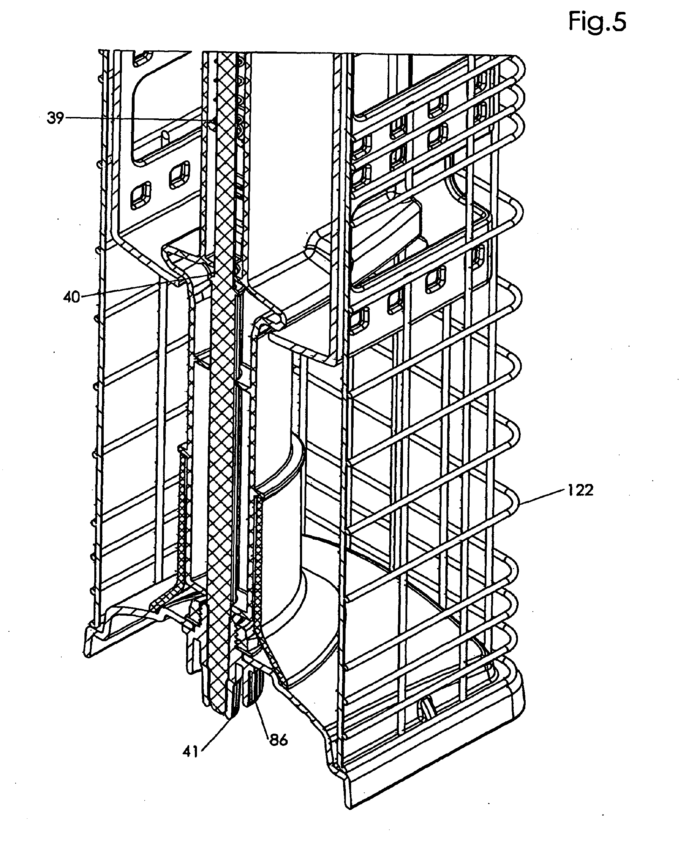

Figure 5 is an enlarged view of the lower portion of Figure 3;
Figure 6 is an enlarged cross sectional view of the upper portion of the suet feeder of Figure 1 in a second longitudinal direction;
Figure 7 is an enlarged sectional view of the lower portion of Figure 6;

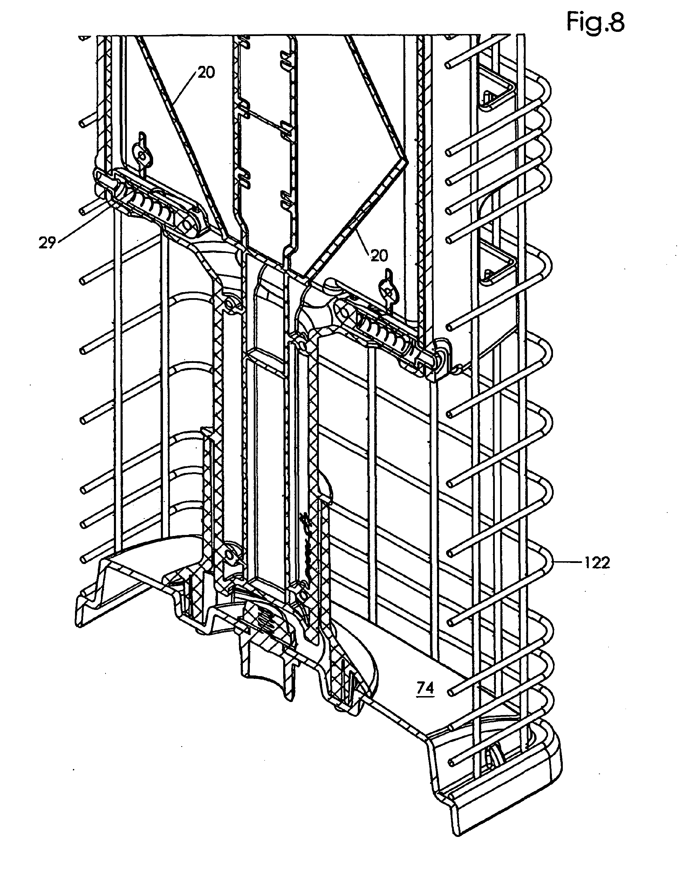

Figure 8 is a view similar to

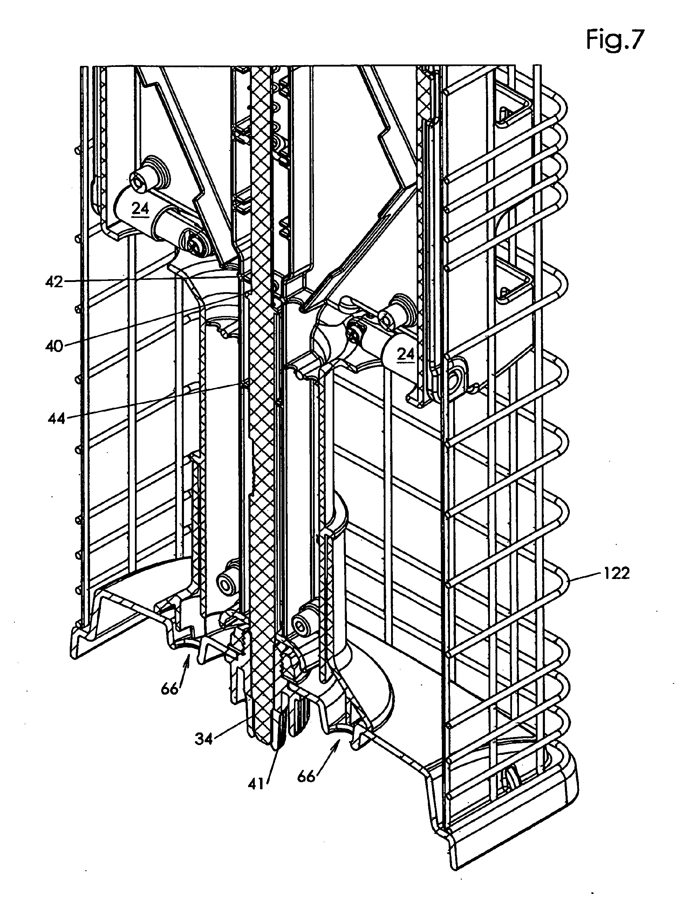

   Figure 7 with some components removed;

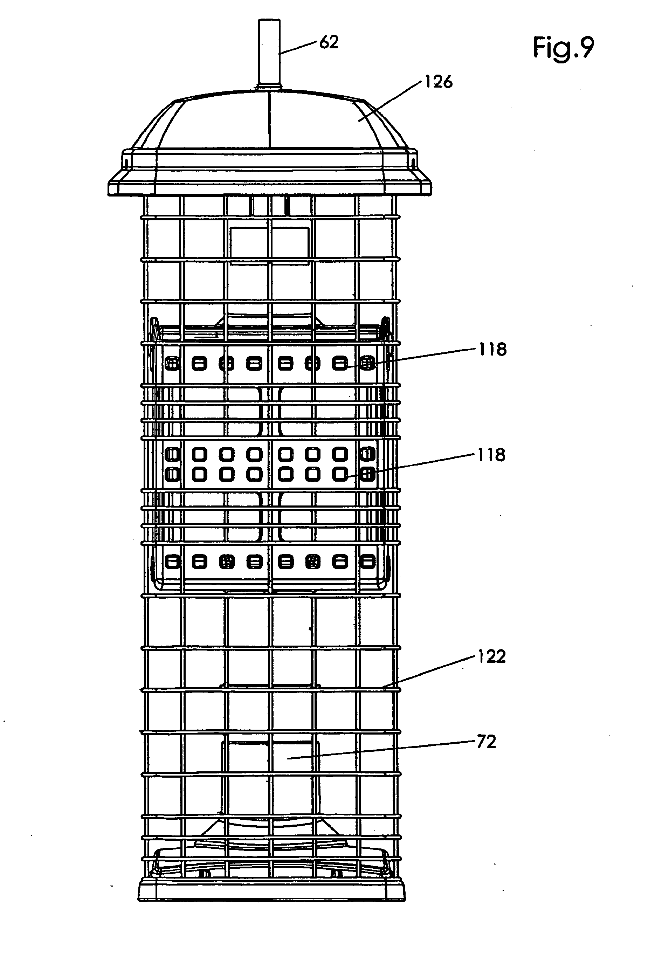

Figure 9 is a front view of the suet feeder in a closed position;

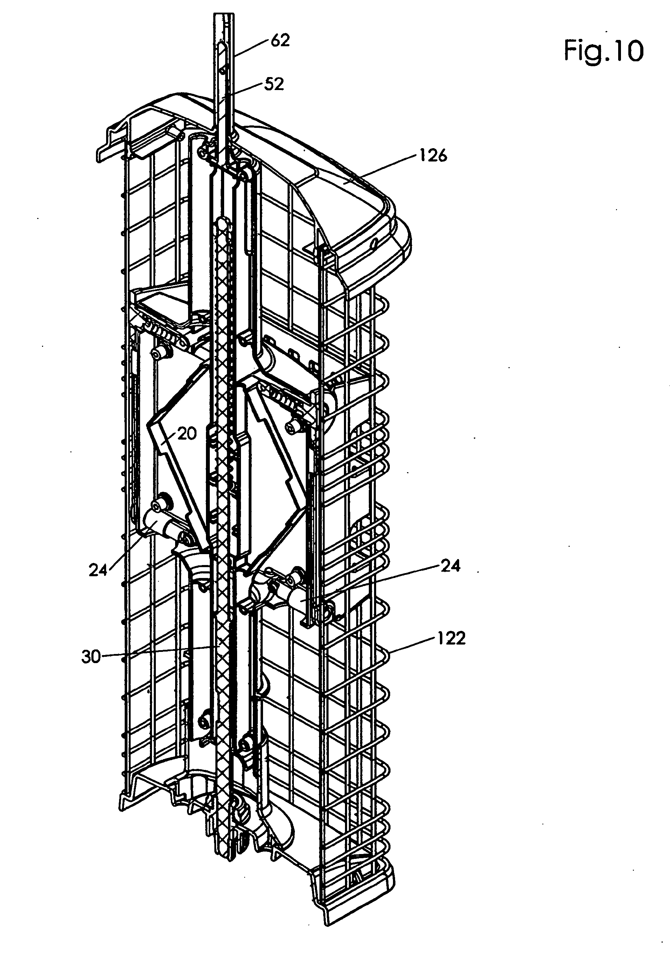

Figure 10 is a longitudinal sectional view of the suet figure in the position of Figure 9;

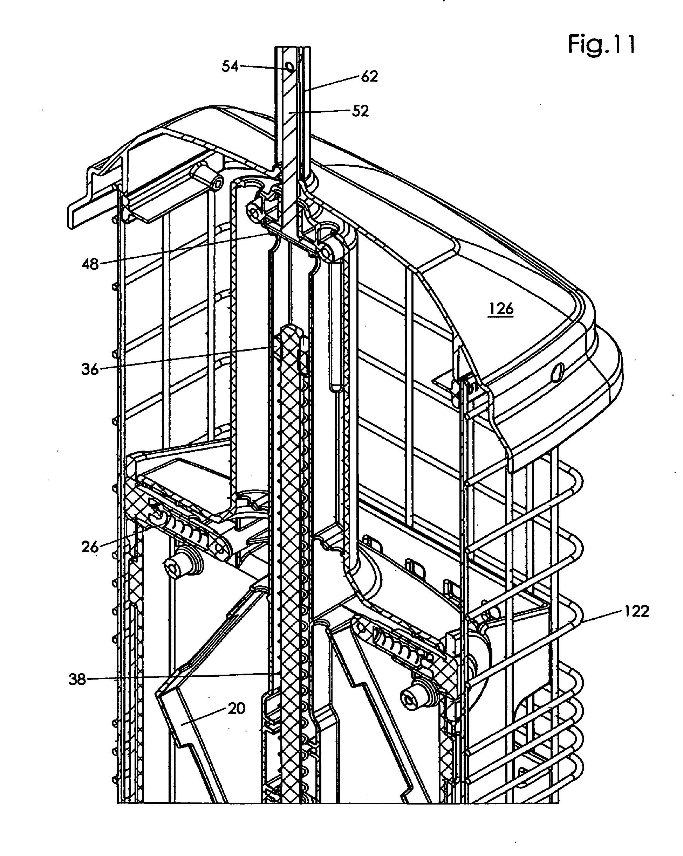

Figure 11 is an enlarged sectional view of the upper portion of the suet feeder in the position of Figure 10;

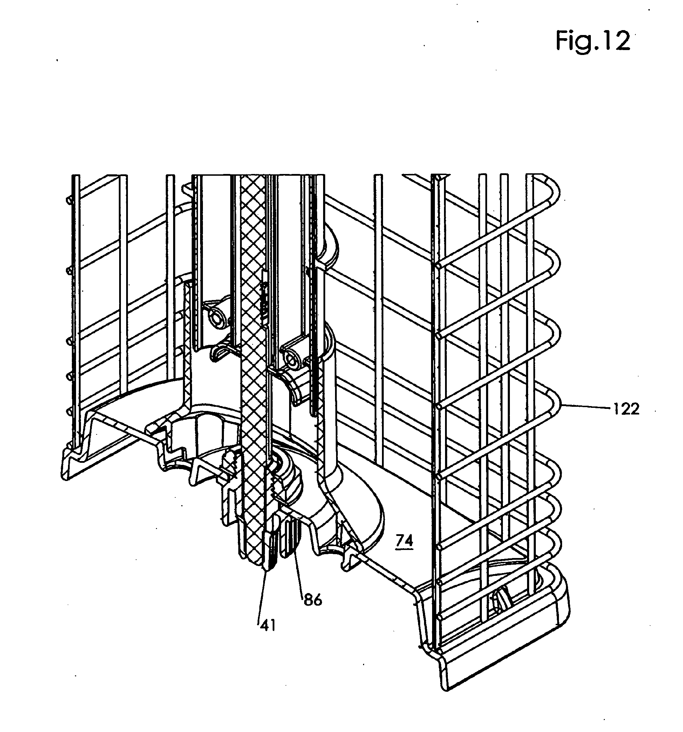

Figure 12 is an enlarged sectional view of the lower portion thereof;

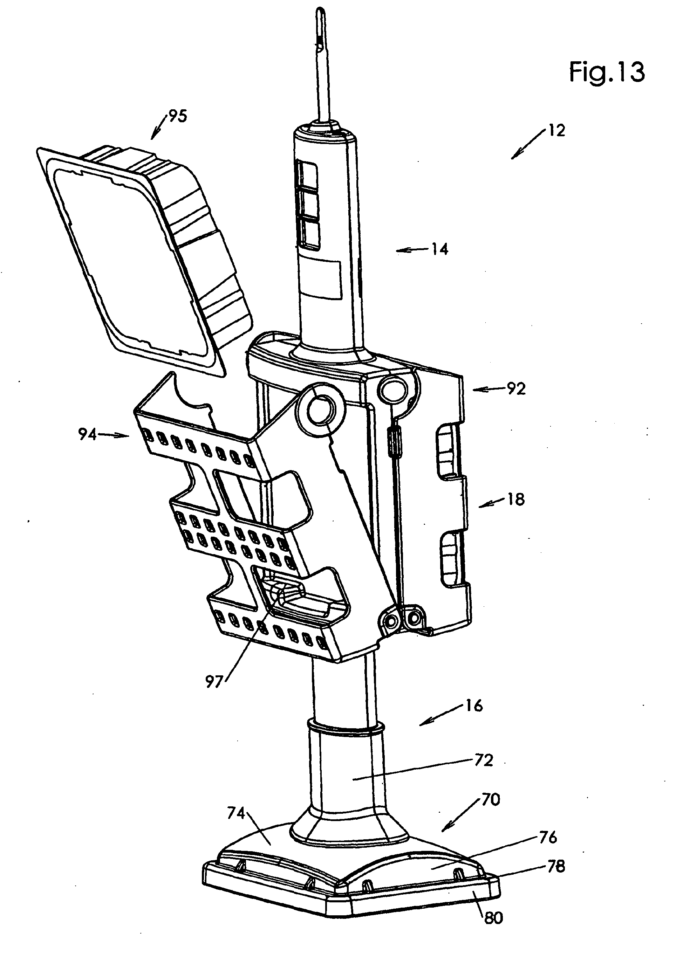

Figure 13 is a perspective view of the central portion of the suet feeder with the shroud removed;

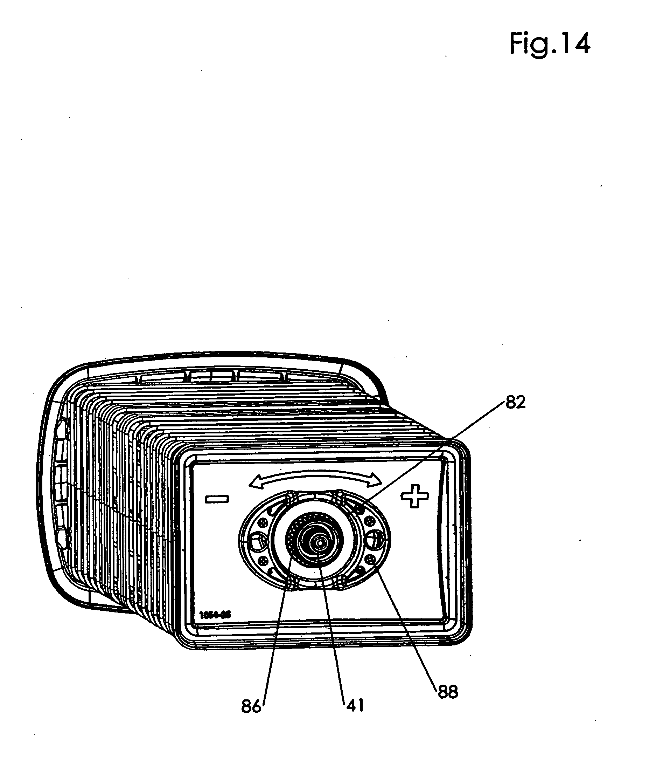

Figure 14 is a perspective view illustrating the bottom of the suet feeder;

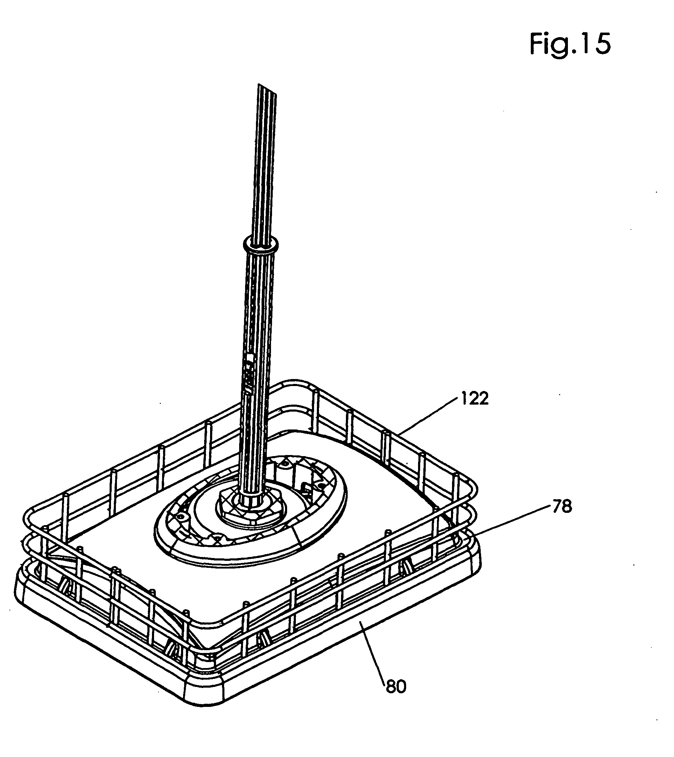

Figure 15 is a perspective view of the base portion thereof; and

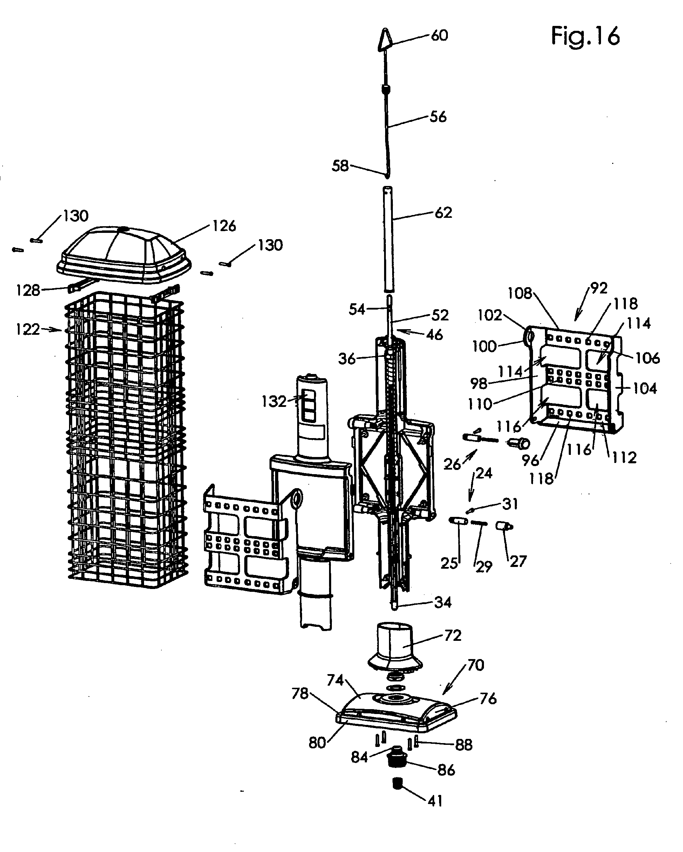

Figure 16 is an exploded view of the suet feeder.

### DETAILED DESCRIPTION OF THE INVENTION

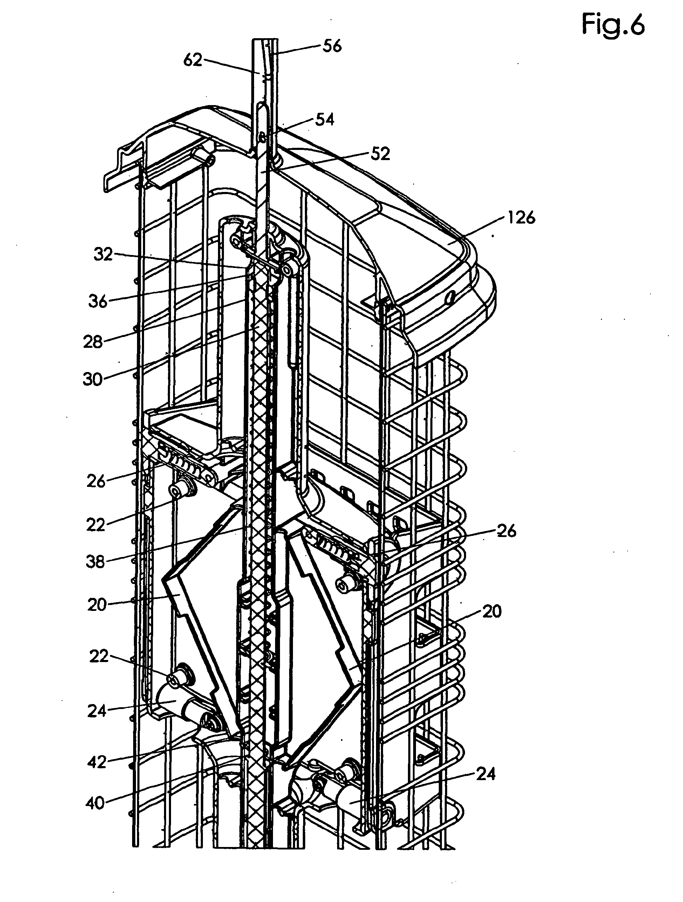

A suet feeder according to one embodiment of the present invention is generally designated by reference numeral 10 and includes a central housing 12. Central housing 12 has an upper portion 14, a lower portion 16, and a center portion 18 as seen in Figure 13. In this description, the terms lower and upper are used for purposes of the clarity of this description with it being understood that the terms refer to the orientation of the suet feeder when in its normal operational position. On center portion 18 as seen in Figure 6, there are provided a plurality of reinforcing ribs 20 along with screw receptacles 22. In the preferred embodiment, the central housing may be molded into halves and mechanically held together by screw fasteners in screw receptacles 22. Naturally, other means of holding the two halves together may be utilized including other mechanical fasteners, adhesive, etc.

Mounted within center section 18 are a pair of lower retaining members 24, being situated at the lower position of center portion 18. Each retaining member 24 comprises a housing 25, a pin 27, a coil spring 29 and screw 31. Also mounted in center portion 18 are a pair of upper retaining members 26, one on each side and of a similar structure. As will be seen, lower retaining members 24 serve both as a pivot point for the suet holders as will discussed in greater detail herein and also as a retaining member. Upper retaining members 26 function to latch the suet holders in position.

Extending through upper portion 14, lower portion 16 and center portion 18 is an inner tube 28. Mounted within inner tube 28 is an elongated rod 30 which has threads 32 on the top end thereof and threads 34 on the lower end. Engaged with threads 32 is a nut 36 which is configured so as to be non-rotatable within inner tube 28. A coil spring 38 is mounted around rod 30 and at one end is biased against nut 36 and at the other end is biased against a stopper 39. A nut 41 is secured to threads 34 on the lower end.

An enlarged stopper 40 is provided at a lower end of rod 30 and is designed to limit travel of rod 30 between a molded upper stop 42 and a molded lower stop 44.

Suet feeder 10 includes a hanger attachment element 46 which has an enlarged end 48 designed to fit in a slot (not numbered) molded in upper portion 14. Shaft 52 of hanger attachment element 46 extends upwardly and includes an aperture 54 formed therein. A hanger 56 has a hook 58 at one end thereof for engaging with aperture 54 and at the other end has a hanging eye 60. A negative grip tube 62 is designed to fit about hanger 56 and hanger attachment element 46.

The central housing 12 includes upper ventilation apertures and lower drainage apertures 66 to permit the ingress and egress of any moisture and air as required.

Suet feeder 10 also includes a base 70 having an upper elliptical portion 72 which is designed to prevent rotation of central housing 12. Lower portion 16 fits within upper elliptical portion 72 as may be seen.

Base 70 also includes a top wall 74, an upper side wall 76 and a horizontal shroud receiving wall 78 which is designed to support the shroud as will be discussed in greater hereinbelow. Extending downwardly from shroud receiving wall 78 is a lower side wall 80.

The suet feeder 10 includes an adjustment mechanism generally designated by reference numeral 82. Adjustment mechanism 82 includes an inner rod holder 84 which is designed to securely retain the lower portion of rod 30 therein. This may be done by means of configuration or the like such that rotation of inner rod holder 84 will cause rotation of rod 30. Adjustment mechanism 82 also includes an outer hand grip 86 for turning inner rod holder 84. A plurality of screws 88 are provided for retaining upper elliptical portion 72 on top wall 74.

Suet feeder 10 includes a pair of suet holders 92 and 94 each designed to retain a suet package 95 and each of which are mirror images of each other and thus only one will be described herein. Suet holder or retainer 92 includes a base or bottom wall 96, a first side wall 98 having an outwardly extending flange 100 at an upper end thereof with an aperture 102 being formed in flange 100. Side wall 104 has a recess 106 formed therein at an upper portion thereof.

Suet holder 92 includes an upper front wall section 108, a lower front wall section 112 and a middle front wall section 110. Between upper wall section 108 and middle front wall 110 there are formed a pair of open sections 114 to permit access to the suet. Similarly, there is provided a pair of open sections 116 between lower front wall section 112 and middle front wall section 110. Suet package 95 is supported by a horizontal wall 95 of central housing 12.

It will be noted that there are apertures 118 provided in each of the upper front wall section 108, lower front wall section 112 and middle front wall section 110.

Suet feeder 10 also includes a shroud 122 and is of a known grid like structure preferably of a metallic material. Formed within the side walls are access openings 124.

A cover 126 is mounted on top of shroud 122. A pair of retaining members 128 are mounted on shroud 122 and a plurality of screws 130 are used to retain cover 126 securely mounted to retaining members 128.

Upper portion 14 of central housing 12 may have a transparent portion 132 in order to provide visual access to nut 36 to verify its position and therefore the tension of spring 38.

In operation, any weight in excess of that predetermined by setting of spring 38 will cause cover 126 and shroud 122 to move downwardly and thus deny access through access openings 124. However, since the same setting may deny access to some heavier birds such as woodpeckers, blue jays and the like, limited access may be had by the longer beak birds through apertures 118 formed in wall sections 108, 110 and 112.

As will be seen from the above, the base functions to tie the structure together. Thus, base 70 is designed to receive shroud 122 and support the same. At the same time, upper elliptical portion 72 receives and is designed to prevent rotation of central housing 12 such that the relationship between shroud 122 and central housing 12 is constant in a vertical plane. In turn, nut 41 secures the central portion to base 70.

## Claims

1. A suet feeder (10) comprising:
a housing (12) having a spring (38) mounted therein, a pair of suet holders (92, 94) connectcd to said housing (12), said suet holders (92, 94) being sized to retain a prepackaged package of suet;
a shroud (122) extending about said suet holders (92, 94) and at least a portion of said housing (12);
said spring (38) biasing said shroud (122) upwardly with respect to said housing (12) and suet holder (92, 94);
said shroud (122) having at least one suet access opening (124) therein to permit access to said suet holders (92, 94), said shroud (122) being moveable between an open position permitting access to said suet holder (92, 94) and a closed position wherein access to said suet holders (92, 94) is denied; and
a cover (126) secured to said shroud (122), wherein one respective suet holder of the pair of suet holders is provided on each side of said housing (12).

2. The suet feeder of claim 1 further including a rod (30) within said housing (12), said spring (38) being mounted about said rod (30), said rod (30) having an upper threaded portion (32), a nut (36) engaged with said upper threaded portion (32).

3. The suet feeder of claim 1 further including a ceatertube, said central rod (30) being mounted within said center tube (28), said nut (36) being held by said center tube (28) in a non-rotatable position.

4. The suet feeder of claim 1 further including a pair of stop members (42, 44) within said center tube (28) to limit movement of said rod (30), and a retaining member (24) own the bottom of said rod (30).

5. The suet feeder of claim 4 further including a base (70), an adjustment member (24) located at the bottom of said rod (30) exteriorly of said base (70), said adjustment member (24) being operative to rotate said central rod (30) with respect to said nut to thereby compress or release said spring (38).

6. The suet feeder of claim 5 wherein a portion of said center tube (28) is transparent to provide visual access to said nut.

7. The suet feeder of claim 1 wherein each of said suet holders (92, 94) and said housing (12) have a base (96) to support said prepackaged package of suet.

8. The suet feeder of claim 3 wherein said suet holder (92, 94) has a plurality of suet access openings (114), said suet access openings (114) being separated by at least one suet retaining member.

9. The suet feeder of claim 8 wherein said suet retaining member has a plurality of relatively small apertures formed therein to permit access to suet by certain birds even when said shroud (122) is in a closed position.

10. The suet feeder of claim 3 wherein said suet holder (92, 94) is pivotably mounted on said housing (12).

11. The suet feeder of claim 10 wherein said housing (12) has first and second lower spring detents, said suet holder (92, 94) having first and second lower apertures to receive said detents to thereby permit pivotable movement.

12. The suet feeder of claim 11 wherein said housing (12) has an upper spring detent, said suet holder having an upper aperture to receive said upper spring detent to thereby lock said suet holder (92, 94) in a closed position.

13. The suet feeder of claim 12 further including drainage and ventilation apertures in upper and lower portions of said housing (12) to permit egress of moisture and air.

14. A suet feeder (10) and a prepackaged package of suet (95) comprising:
a housing (12) having a spring (38) mounted therein, a pair of suet holders (92, 94) connected to said housing (12), said prepackaged package of suet (95) being mounted in said suet holders (92, 94);
a shroud (122) extending about said suet holders (92, 94) and at least a portion of said housing (12);
said spring (38) biasing said shroud (122) upwardly with respect to said housing (12) and suet holders (92, 94):
said shroud (122) having at least one suet access opening (124) to permit access to said suet holders (92, 94), said shroud (122) being moveable between an open position permitting access to said suet holders (92, 94) and a closed position where access to said suet holders (92, 94) is denied; and
a cover (126) secured to said shroud (122), wherein one respective suet holder of the pair of suet holder is provided on each side of said housing (12).

## Patentansprüche

1. Talgfuttervorrichtung, aufweisend:
ein Gehäuse (12) mit einer darin befestigten Feder (38), ein Paar mit dem Gehäuse (12) verbundene Talghalter (92, 94), wobei die Talghalter (92, 94) in ihrer Größe darauf abgestimmt sind, ein vorgepacktes Talgpaket zu halten,
eine sich über die Talghalter (92, 94) und zumindest über einen Abschnitt des Gehäuses (12) erstreckende Verkleidung (122);
wobei die Feder (38) die Verkleidung (122) in Bezug auf das Gehäuse (12) und die Talghalter (92, 94) nach oben zwingt;
wobei die Verkleidung (122) mindestens eine einen Zugang zu den Talghaltern (92, 94) erlaubende Talgzugangs-Öffnung aufweist (124), wobei die Verkleidung (122) zwischen einer den Zugang zu den Talghaltern (92, 94) erlaubenden, offenen Position und einer den Zugang zu den Talghaltern (92, 94) verweigernden, geschlossenen Position bewegbar ist; und eine an der Verkleidung (122) befestigte Abdeckung (126), wobei jeweils ein Talghalter des Paares der Talghalter an je einer Seite des Gehäuses (12) angeordnet ist.

2. Talgfuttervorrichtung nach Anspruch 1 zusätzlich aufweisend eine innerhalb des Gehäuses (12) angeordnete Stange (30), wobei die Feder (38) um die Stange (30) herum angeordnet ist, wobei die Stange einen oberen Gewindeabschnitt (32) aufweist, und eine mit dem oberen Gewindeabschnitt (32) in Eingriff stehende Gegenmutter (36).

3. Talgfuttervorrichtung nach Anspruch 1 zusätzlich aufweisend ein Zentralrohr, wobei die zentrale Stange (30) in dem Zentralrohr (28) angeordnet ist und wobei die Gegenmutter (36) durch das Zentralrohr (28) in einer nicht-rotierbaren Position gehalten ist.

4. Talgfuttervorrichtung nach Anspruch 1 zusätzlich aufweisend ein Paar in dem Zentralrohr (28) angeordnete Anschlagelemente (42, 44) zur Bewegungseinschränkung der Stange (30), und ein Rückstellelement (24) am unteren Teil der Stange (30).

5. Talgfuttervorrichtung nach Anspruch 4 zusätzlich aufweisend einen Sockel (70), ein im unteren Teil der Stange (30) außerhalb des Sockels (70) angeordnetes Einstellelement (24), wobei das Einstellelement (24) in einer Wirkverbindung mit der zentralen Stange (30) steht um die zentrale Stange (30) in Bezug auf die Gegenmutter zu drehen und um dadurch die Feder (38) zu stauchen oder zu entlasten.

6. Talgfuttervorrichtung nach Anspruch 5, wobei ein Abschnitt des Zentralrohres (28) transparent ausgebildet ist um visuelle Einsicht auf die Gegenmutter zu erlauben.

7. Talgfuttervorrichtung nach Anspruch 1, wobei jeder der Talghalter (92, 94) und das Gehäuse (12) einen Boden (96) zur Auflage der vorgepackten Talgpakete aufweisen.

8. Talgfuttervorrichtung nach Anspruch 3, wobei jeder der Talghalter (92, 94) mehrere Talgzugangs-Oftnungen (114) aufweist, wobei die Talgzugangs-Öffnungen (114) durch wenigstens ein Talgrückhalteelement voneinander getrennt sind.

9. Talgfuttervorrichtung nach Anspruch 8, wobei das Talgrückhalteelement mehrere relativ kleine darin ausgebildete Öffnungen aufweist, um Zugang zum Talg für bestimmte Vögel zu erlauben, selbst wenn die Verkleidung (122) in einer geschlossenen Position vorliegt.

10. Talgfuttervorrichtung nach Anspruch 3, wobei die Talghalter (92, 94) schwenkbar am Gehäuse (12) gelagert sind.

11. Talgfuttervorrichtung nach Anspruch 10, wobei das Gehäuse (12) erste und zweite untere Federarretierungen aufweist, wobei die Talghalter (92, 94) erste und zweite untere Öffnungen für den Eingriff der Federarretierungen aufweisen um die Schwenkbewegung zu erlauben.

12. Talgfuttervorrichtung nach Anspruch 11, wobei das Gehäuse (12) eine obere Federarretierung aufweist, wobei die Talghalter eine obere Öffnung für den Eingriff der oberen Federarretierung aufweisen um die Talghalter (92, 94) in einer geschlossenen Position zu sichern.

13. Talgfuttervorrichtung nach Anspruch 12 zusätzlich aufweisend Drainage- und Belüftungsöffnungen in oberen und unteren Abschnitten des Gehäuses (12) um Austritt von Feuchtigkeit und Luft zu erlauben.

14. Talgfuttervorrichtung (10) und vorgepacktes Talgpaket (95) aufweisend:
ein Gehäuse (12) mit einer darin befestigten Feder (38), ein Paar mit dem Gehäuse (12) verbundene Talghalter (92, 94), wobei das vorgepackte Talgpaket (95) in den Talghaltern (92, 94) befestigt ist;
eine sich über die Talghalter (92, 94) und zumindest über einen Abschnitt des Gehäuses (12) erstreckende Verkleidung (122);
wobei die Feder (38) die Verkleidung (122) in Bezug auf das Gehäuse (12) und die Talghalter (92, 94) nach oben zwingt;
wobei die Verkleidung (122) mindestens eine einen Zugang zu den Talghaltern (92, 94) erlaubende Talgzugangs-Öffnung aufweist (124), wobei die Verkleidung (122) zwischen einer den Zugang zu den Talghaltern (92, 94) erlaubenden, offenen Position und einer den Zugang zu den Talghaltern (92, 94) verweigernden, geschlossenen Position bewegbar ist; und eine an der Verkleidung (122) befestigte Abdeckung (126), wobei jeweils ein Talghalter des Paares der Talghalter an je einer Seite des Gehäuses (12) angeordnet ist.

## Revendications

1. Dispositif d'alimentation de suif (10) comprenant:
un boîtier (12) comportant un ressort (38) monté dans celui-ci, une paire de supports à suif (92, 94) connectés audit boîtier (12), lesdits supports à suif (92, 94) étant dimensionnés de manière à retenir un emballage de suif préemballé;
un carénage (122) s'étendant autour desdits supports à suif (92, 94) et d'au moins une partie dudit boîtier (12);
ledit ressort (38) précontraignant ledit carénage (122) vers le haut par rapport audit boîtier (12) et auxdits supports à suif (92, 94);
ledit carénage (122) comportant au moins une ouverture d'accès au suif (124) dans celle-ci, pour permettre l'accès auxdits supports à suif (92, 94), ledit carénage (122) étant déplaçable entre une position ouverte permettant l'accès auxdits supports à suif (92, 94) et une position fermée dans laquelle l'accès auxdits supports à suif (92, 94) est refusé; et
un couvercle (126) fixé audit carénage (122), un support à suif respectif de la paire de supports à suif étant prévu de chaque côté dudit boîtier (12).

2. Dispositif d'alimentation de suif selon la revendication 1, comprenant en outre une tige (30) à l'intérieur dudit boîtier (12), ledit ressort (38) étant monté autour de ladite tige (30), ladite tige (30) comportant une partie filetée supérieure (32), un écrou (36) engagé avec ladite partie filetée supérieure (32).

3. Dispositif d'alimentation de suif selon la revendication 1, comprenant en outre un tube de centrage, ladite tige centrale (30) étant montée à l'intérieur dudit tube de centrage (28), ledit écrou (36) étant maintenu dans une position non-rotative par ledit tube de centrage (28).

4. Dispositif d'alimentation de suif selon la revendication 1, comprenant en outre une paire d'éléments d'arrêt (42, 44) à l'intérieur dudit tube de centrage (28), pour limiter le mouvement de ladite tige (30), et un élément de retenue (24) sur le bas de ladite tige (30).

5. Dispositif d'alimentation de suif selon la revendication 4, comprenant en outre une base (70), un élément de réglage (24) situé en bas de ladite tige (30), à l'extérieur de ladite base (70), ledit élément de réglage (24) étant opérationnel pour faire tourner ladite tige centrale (30) par rapport audit écrou, pour ainsi comprimer ou relâcher ledit ressort (38).

6. Dispositif d'alimentation de suif selon la revendication 5, dans laquelle une partie dudit tube de centrage (28) est transparente pour permettre un accès visuel audit écrou.

7. Dispositif d'alimentation de suif selon la revendication 1, dans laquelle chacun desdits supports à suif (92, 94) et ledit boîtier (12) comportent une base (96) destinée à supporter ledit emballage de suif préemballé.

8. Dispositif d'alimentation de suif selon la revendication 3, dans laquelle ledit support à suif (92, 94) comporte une pluralité d'ouvertures d'accès au suif (114), lesdites ouvertures d'accès au suif (114) étant séparées par au moins un élément de retenue de suif.

9. Dispositif d'alimentation de suif selon la revendication 8, dans laquelle ledit élément de retenue de suif comporte une pluralité d'orifices relativement petits, formés dans celui-ci pour permettre à certains oiseaux d'accéder au suif même lorsque ledit carénage (122) se trouve dans une position fermée.

10. Dispositif d'alimentation de suif selon la revendication 3, dans laquelle ledit support à suif (92, 94) est monté de façon pivotante sur ledit boîtier (12).

11. Dispositif d'alimentation de suif selon la revendication 10, dans laquelle ledit boîtier (12) comporte des première et deuxième détentes de ressort inférieures, ledit support à suif (92, 94) comportant des première et deuxième ouvertures pour recevoir lesdites détentes, pour ainsi permettre un mouvement pivotant.

12. Dispositif d'alimentation de suif selon la revendication 11, dans laquelle ledit boîtier (12) comporte une détente de ressort supérieure, ladite dispositif d'alimentation de suif comportant une ouverture supérieure pour recevoir ladite détente de ressort supérieure pour ainsi bloquer ledit support à suif (92, 94) dans une position fermée.

13. Dispositif d'alimentation de suif selon la revendication 12, comprenant en outre des ouvertures de drainage et d'aération dans des parties supérieure et inférieure dudit boîtier (12) pour permettre l'évacuation de l'humidité et de l'air.

14. Dispositif d'alimentation de suif (10) et emballage de suif préemballé (95) comprenant:
un boîtier (12) comportant un ressort (38) monté dans celui-ci, une paire de supports à suif (92, 94) connectés audit boîtier (12), ledit emballage de suif préemballé (95) étant monté dans lesdits supports à suif (92, 94);
un carénage (122) s'étendant autour desdits supports à suif (92, 94) et d'au moins une partie dudit boîtier (12);
ledit ressort (38) précontraignant ledit carénage (122) vers le haut par rapport audit boîtier (12) et auxdits supports à suif (92, 94);
ledit carénage (122) comportant au moins une ouverture d'accès au suif (124), pour permettre l'accès auxdits supports à suif (92, 94), ledit carénage (122) étant déplaçable entre une position ouverte permettant l'accès auxdits supports à suif (92, 94) et une position fermée dans laquelle l'accès auxdits supports à suif (92, 94) est refusé; et
un couvercle (126) fixé audit carénage (122), un support à suif respectif de la paire de supports à suif étant prévu de chaque côté dudit boîtier (12).
